Europäisches Patentamt

European Patent Office

Office européen des brevets

(19)

(11) Numéro de publication : **0 071 493**
**B1**

(12) **FASCICULE DE BREVET EUROPÉEN**

(45) Date de publication du fascicule du brevet :
20.02.85

(51) Int. Cl.⁴ : **C 08 F   8/00**, C 08 F 16/36

(21) Numéro de dépôt : **82401151.4**

(22) Date de dépôt : **23.06.82**

(54) **Polymères de résines d'hydrocarbures aromatiques contenant des groupes propénoyles et leur procédé de préparation.**

(30) Priorité : 24.07.81 FR 8114381

(43) Date de publication de la demande :
09.02.83 **Bulletin 83/06**

(45) Mention de la délivrance du brevet :
20.02.85 **Bulletin 85/08**

(84) Etats contractants désignés :
**AT BE CH DE FR GB IT LI LU NL SE**

(56) Documents cités :
**FR-A- 2 344 572**
**US-A- 2 566 302**
**US-A- 3 219 644**
**US-A- 3 223 679**

(73) Titulaire : **Société Chimique des Charbonnages**
**Tour Aurore Place des Reflets Cédex no 5**
**F-92080 Paris la Défense 2 (FR)**

(72) Inventeur : **Mehalla, Hacène**
**23, rue Sleidan**
**F-67000 Strasbourg (FR)**

(74) Mandataire : **Fourquet, Antoinette et al**
**CdF Chimie S.A. Service Propriété Industrielle Tour**
**Aurore Place des Reflets Cedex 5**
**F-92080 Paris la Défense 2 (FR)**

Jouve, 18, rue St-Denis, 75001 Paris, France

## Description

La présente invention concerne des polymères obtenus par voie radicalaire de résines d'hydrocarbures aromatiques contenant des groupes propénoyle.

Il est connu par exemple par le brevet américain 3 219 644 que des résines de polystyrène comportant des groupes propénoyle greffés peuvent copolymériser avec des monomères vinyliques comme le styrène, l'acétate de vinyle, l'acrylate de méthyle.

On a maintenant trouvé de nouvelles résines d'hydrocarbures aromatiques contenant des groupes propénoyle qui peuvent être homopolymérisées ou copolymérisées par voie radicalaire avec des monomères insaturés.

La présente invention a donc pour objet des polymères contenant des unités dérivées d'une résine d'hydrocarbures aromatiques, caractérisé en ce que la résine constituant lesdites unités a une masse moléculaire moyenne comprise entre 500 et 2 500 et un point de ramollissement Kræmer-Sarnow compris entre 50 et 150 °C et comprend d'une part des motifs dérivés du styrène et/ou de ses homologues supérieurs, d'autre part des motifs dérivés de l'indène et/ou de ses homologues supérieurs et en moyenne de 0,02 à 0,07 restes propénoyles éventuellement substitués par noyau aromatique, fixés sur les noyaux aromatiques desdits motifs, lesdits groupes ayant pour formule RR'C = CR''—CO dans laquelle R, R' et R'', identiques ou différents, sont choisis parmi l'hydrogène, les groupes méthyle, éthyle, n-propyle, isopropyle et les atomes d'halogène et en ce qu'il est obtenu par voie radicalaire.

Les polymères selon l'invention comprennent d'une part des homopolymères ne contenant que les unités décrites précédemment et d'autre part des copolymères, également obtenus par voie radicalaire, contenant en outre des unités dérivées d'au moins un comonomère insaturé. Des comonomères insaturés entrant dans le cadre de la présente invention sont par exemple le styrène, l'α-méthylstyrène, le vinyltoluène, l'indène, l'acétate de vinyle, l'acrylate de méthyle, l'anhydride maléique.

Les polymères selon l'invention ont une masse moléculaire moyenne en poids généralement comprise entre $10^4$ et $10^5$.

La résine d'hydrocarbures aromatiques que l'on soumet à polymérisation radicalaire selon l'invention est obtenue par acylation, au moyen d'un chlorure d'acide insaturé, d'une résine d'hydrocarbures aromatiques obtenue par exemple par polymérisation cationique de mélanges d'hydrocarbures aromatiques provenant avantageusement du craquage à la vapeur de naphta. Lesdits mélanges d'hydrocarbures aromatiques contiennent généralement du styrène, de l'α-méthylstyrène, des vinyltoluènes, de l'indène et des méthylindènes. Pour la réalisation de la présente invention, on choisit avantageusement un mélange contenant de 10 à 90 %, et de préférence de 30 à 60 % en moles de la somme indène + méthylindènes. De tels mélanges peuvent contenir également du toluène en faible quantité, des xylènes et de l'éthylbenzène. La polymérisation cationique de ces mélanges a lieu en présence d'acide de Lewis et de préférence selon un procédé continu comme décrit dans le brevet français n° 2.344.572. La résine d'hydrocarbures aromatiques utilisée a une masse moléculaire moyenne comprise entre 500 et 2 500 et un point de ramollissement Kræmer-Sarnow compris entre 50 et 150 °C. Le chlorure d'acide insaturé mis en réaction avec cette résine d'hydrocarbures insaturés a pour formule générale RR'C = CR''—COCl dans laquelle R, R' et R'', identiques ou différents, sont choisis parmi l'hydrogène, les groupes méthyle, éthyle, n-propyle, isopropyle et les atomes d'halogène. On peut ainsi utiliser les chlorures des acides acrylique, méthacrylique, crotonique, iso-crotonique, 2-chloroacrylique, 3-chloro-acrylique, tiglique, angélique, 2-penténoïque, 2-hexénoïque, 2,3-dichloro-acrylique.

La résine d'hydrocarbure est dissoute, avant réaction, dans un composé hydrocarboné inerte tel que le chlorure de méthylène.

La réaction entre le chlorure d'acide et la résine d'hydrocarbures aromatiques conduit à la fixation du radical RR'C = CR''—CO— sur les noyaux aromatiques de ladite résine. Le taux de fixation dépend du rapport entre le nombre de moles de chlorure d'acide utilisé et le nombre de noyaux aromatiques contenus dans la quantité de résine mise à réagir. On préfère utiliser un rapport tel qu'il conduise à la formation d'une résine modifiée contenant de 0,02 à 0,07 groupe propénoyle RR'C = CR''—CO— par noyau aromatique. Les résines contenant une plus grande proportion de groupes vinylcétone sont difficiles à obtenir étant donné leur tendance à former un gel.

Le procédé de préparation des polymères selon l'invention consiste à mettre la résine d'hydrocarbures aromatiques contenant des groupes propénoyle en milieu solvant (généralement un hydrocarbure tel que le toluène) en présence d'un initiateur de radicaux libres tel qu'un peroxyde minéral ou organique, un hydroperoxyde, un perester, l'azobisisobutyronitrile. Afin d'éviter une réticulation la réaction est généralement effectuée à température modérée comprise entre 40° et 110 °C.

La copolymérisation des résines d'hydrocarbures aromatiques contenant des groupes vinylcétone avec des comonomères insaturés, est effectuée dans les mêmes conditions.

Les exemples suivants ont pour but d'illustrer l'invention.

Exemple 1

Préparation d'une résine d'hydrocarbures aromatiques contenant des groupes propénoyle.

Dans un réacteur muni de moyens de chauffage et refroidissement régulés et de moyens d'agitation on introduit 500 ml de chlorure de méthylène et 50 g d'une résine d'hydrocarbures insaturés contenant les motifs dérivés des hydrocarbures suivants, en % en moles :

Styrène :10 %
Vinyl toluènes : 35 %
Indène : 34 %
α-méthylstyrène : 3 %
méthylindène : 18 %

ayant une masse moléculaire moyenne en nombre de 1 700, un point de ramollissement Kræmer-Sarnow (Norme NFT 67001) de 140 °C et un indice d'iode de 39 (Norme ASTM D 1959-69).

Dans la solution obtenue on introduit progressivement à température ambiante 6,66 g de chlorure d'acide acrylique. Sous vive agitation on introduit ensuite dans le mélange réactionnel, à température ambiante et très progressivement 12 g de chlorure d'aluminium anhydre pulvérulent. Après 30 minutes de réaction le mélange réactionnel, de coloration rouge foncé, est versé dans un mélange de glace et d'acide chlorhydrique sous vive agitation. La décoloration est complète. On distille le chlorure de méthylène à température ambiante sous pression réduite. La résine contenant des groupes propénoyle est précipitée. On la filtre, la broie, la lave une seconde fois avec de l'eau acidulée, la filtre à nouveau et la sèche. On peut purifier la résine obtenue en la dissolvant dans du benzène ou du toluène, en filtrant la solution et distillant le solvant sous pression réduite. Sur cette résine purifiée on détermine la masse moléculaire moyenne en nombre ($M_n = 4980$) et le nombre de groupes vinylcétone fixé, en moyenne, par noyau aromatique (0,058). Cette dernière détermination est effectuée par polarographie.

Exemple 2

Homopolymérisation radicalaire

Dans un réacteur muni de moyens de chauffage, refroidissement et agitation on introduit 100 ml de toluène dans lesquels on dissout 10 g de la résine obtenue à l'exemple 1.

On chauffe le mélange à 75 °C sous atmosphère d'azote et y ajoute 5 mg d'azobisisobutyronitrile dissous dans du toluène. On renouvelle cette opération toutes les 5 heures. Au bout de 40 heures de réaction on précipite le milieu réactionnel dans du méthanol. Le précipité obtenu est filtré et séché. On recueille ainsi un homopolymère dont la masse moléculaire moyenne en poids est de 30 000.

Exemple 3

Copolymérisation radicalaire avec l'anhydride maléique

Dans les mêmes conditions qu'à l'exemple 2, on effectue la polymérisation d'un mélange de 10 g de résine selon l'exemple 1 et de 0,5 g d'anhydride maléique. On obtient un copolymère dont la masse moléculaire moyenne en poids est de 30 000.

**Revendications**

1. Polymère contenant des unités dérivées d'une résine d'hydrocarbures aromatiques, caractérisé en ce que la résine constituant lesdites unités a une masse moléculaire moyenne comprise entre 500 et 2 500 et un point de ramollissement Kræmer-Sarnow compris entre 50 et 150 °C et comprend d'une part des motifs dérivés du styrène et/ou de ses homologues supérieurs, d'autre part des motifs dérivés de l'indène et/ou de ses homologues supérieurs et en moyenne de 0,02 à 0,07 restes propénoyles éventuellement substitués par noyau aromatique, fixés sur les noyaux aromatiques desdits motifs, lesdits groupes ayant pour formule $RR'C = CR''$—CO dans laquelle R, R' et R'', identiques ou différents, sont choisis parmi l'hydrogène, les groupes méthyle, éthyle, n-propyle, isopropyle et les atomes d'halogène et en ce qu'il est obtenu par voie radicalaire.

2. Polymère selon la revendication 1 caractérisé en ce que la résine d'hydrocarbures comprend de 30 à 60 % en moles de motifs dérivés de l'indène et/ou de ses homologues supérieurs.

3. Polymère selon l'une des revendications 1 et 2 caractérisé en ce qu'il comprend en outre des unités dérivées d'au moins un comonomère insaturé.

4. Polymère selon la revendication 3 caractérisé en ce que le comonomère insaturé est choisi parmi le styrène, l'α-méthylstyrène, le vinyltoluène, l'indène, l'acétate de vinyle, l'acrylate de méthyle et l'anhydride maléique.

5. Polymère selon l'une des revendications 1 à 4 caractérisé en ce que sa masse moléculaire moyenne en poids est comprise entre $10^4$ et $10^5$.

6. Procédé de préparation d'un polymère selon l'une des revendications 1 à 5 caractérisé en ce que l'on met la résine d'hydrocarbures aromatiques en milieu solvant, en présence d'un initiateur de radicaux libres et éventuellement d'un ou plusieurs monomères insaturés.

**Claims**

1. A polymer containing units derived from a resin of aromatic hydrocarbons, characterized in that the resin constituting the said units has an average molecular weight of between 500 and 2,500 and a Kræmer-Sarnow softening point between 50 and 150 °C and comprises units derived from styrene and/or its higher homologues on the one hand, and units derived from indene and/or its higher homologues on the other hand, and on average from 0.02 to 0.07 propenoyl residues possibly substituted by aromatic nucleus and fixed to the aromatic nuclei of the said units, the said groups having the formula RR'C = CR"—CO in which R, R' and R", the same or different, are selected from hydrogen, methyl, ethyl, n-propyl, and isopropyl groups and halogen atoms, and it is prepared in the manner of a radical.

2. A polymer according to Claim 1, characterized in that the hydrocarbon resin comprises from 30 to 60 mol.% of units derived from indene and/or its higher homologues.

3. A polymer according to one of Claims 1 and 2, characterized in that it further comprises units derived from at least one unsaturated co-monomer.

4. A polymer according to Claim 3, characterized in that the unsaturated co-monomer is selected from styrene, α-methyl styrene, vinyl toluene, indene, vinyl acetate, methyl acrylate and maleic anhydride.

5. A polymer according to any one of Claims 1 to 4, characterized in that its average molecular weight is between $10^4$ and $10^5$.

6. A process for preparing a polymer according to any one of Claims 1 to 5, characterized in that the aromatic hydrocarbon resin is placed in a solvent medium, in the presence of a catalyst and possibly one or more unsaturated monomers.

**Ansprüche**

1. Polymer, das von einem aromatischen Kohlenwasserstoffharz abgeleitete Einheiten enthält, dadurch gekennzeichnet, daß das die genannten Einheiten bildende Harz eine mittlere Molekularmasse zwischen 500 und 2 500 und eine Kræmer-Sarnow-Erweichungstemperatur zwischen 50 und 150 °C besitzt, und einerseits von Styrol und/oder dessen höheren Homologen abstammende Grundeinheiten, anderseits von Inden und/oder dessen höheren Homologen abstammende Grundeinheiten sowie durchschnittlich 0,02 bis 0,07 gegebenenfalls substituierte Propenoylreste pro aromatischem Kern enthält, die mit den aromatischen Kernen der genannten Grundeinheiten verknüpft sind, wobei die genannten Gruppen die Formel RR'C = CR"—CO besitzen, in der R,R' und R", identisch oder verschieden, ausgewählt sind aus der Gruppe bestehend aus Wasserstoff, den Methyl-, Äthyl-, n-Propyl- und Isopropylgruppen und den Halogenatomen, und daß es auf dem Radikalweg erhalten wird.

2. Polymer nach Anspruch 1, dadurch gekennzeichnet, daß das Kohlenwasserstoffharz 30 bis 60 Mol.-% an von Inden und/oder dessen höheren Homologen abstammenden Grundeinheiten enthält.

3. Polymer nach Anspruch 1 oder 2, dadurch gekennzeichnet, daß es weiters von mindestens einem ungesättigten Comonomer abstammende Grundeinheiten enthält.

4. Polymer nach Anspruch 3, dadurch gekennzeichnet, daß das ungesättigte Comonomer ausgewählt ist aus der Gruppe bestehend aus Styrol, α-Methylstyrol, Vinyltoluol, Inden, Vinylacetat, Methylacrylat und Maleinsäureanhydrid.

5. Polymer nach einem der Ansprüche 1 bis 4, dadurch gekennzeichnet, daß seine durch das Gewichtsmittel bestimmte Molekularmasse zwischen $10^4$ und $10^5$ beträgt.

6. Verfahren zur Herstellung eines Polymers nach einem der Ansprüche 1 bis 5, dadurch gekennzeichnet, daß man das aromatische Kohlenwasserstoffharz in Gegenwart eines Initiators in Form freier Radikale und eventuell eines oder mehrerer ungesättigter Monomere in ein Lösungsmittelmilieu einbringt.